# EUROPEAN PATENT APPLICATION

(11) **EP 0 926 386 A2**
(43) Date of publication of application: **30.06.1999**
(21) Application number: 98308919.4
(22) Date of filing: 30.10.1998
(51) Int. Cl.: F16F 13/10

(54) **Hydroelastic supports**

(30) Priority: 22.12.1997 GB 9727122
(71) Applicant: DRAFTEX INDUSTRIES LIMITED, Edinburgh EH2 3AP, Scotland (GB)
(72) Inventor: Drumel, Philippe, 44980 Sainte-Luce-Sur-Loire (FR); Fort, Patrice, 44470 Thouare-Sur-Loire (FR)
(74) Representative: Foster, David Martyn

(57) **Abstract**

A hydroelastic support, such as for use as an engine mount in a vehicle, comprises a liquid-filled working chamber (16) and a liquid-filled compensation chamber (18). The working chamber has a flexible-walled part which is flexed by the engine vibrations so as to create pressure changes within the working chamber. A control member (26) comprises a disc-shaped flexible rubber element (28) located within an aperture (27) in a rigid wall between the two chambers (16,18). The flexible element (28) flexes in response to the pressure changes in the working chamber and causes partial damping thereof. Upper and lower movement-limitation members (32,34), made of relatively rigid material, limit the flexing of the flexible element (28) in response to high amplitude vibrations.

## Description

The invention relates to a hydroelastic support, comprising two relatively rigid elements for respective connection to two relatively vibratable members, a chamber containing a fluid and having a wall interconnected with the two elements so that part of the wall flexes in response to the vibrations causing consequent pressure variations within the chamber, and control means incorporating an element of flexible material locally forming part of the wall and flexing at least in relation to adjacent parts of the wall in response to the vibrations so at least partially to damp the vibrations, the control means including movement-limiting means for positively limiting the extent of flexing of the flexible element.

Such a support is known, for example, from EP-A-0 228 967. Here a valve member made of flexible material is located in the wall of the chamber and responsive to the pressure of the fluid rise fixed grilles. The invention is concerned with increasing the limiting stiffness of the support.

According to the invention, therefore, the support as first set forth above is characterised in that the movement-limiting means is carried by and moves with the element of flexible material.

Hydroelastic supports embodying the invention will now be described, by way of example only, with reference to the accompanying diagrammatic drawings in which:
Figure 1 is a side view, partially in section, of one of the supports;
Figure 2 is a cross-section through a control member used in the support of Figure 1 and is an enlarged view of the region II in Figure 1; and
Figure 3 shows a modified form of the control member of Figure 2.

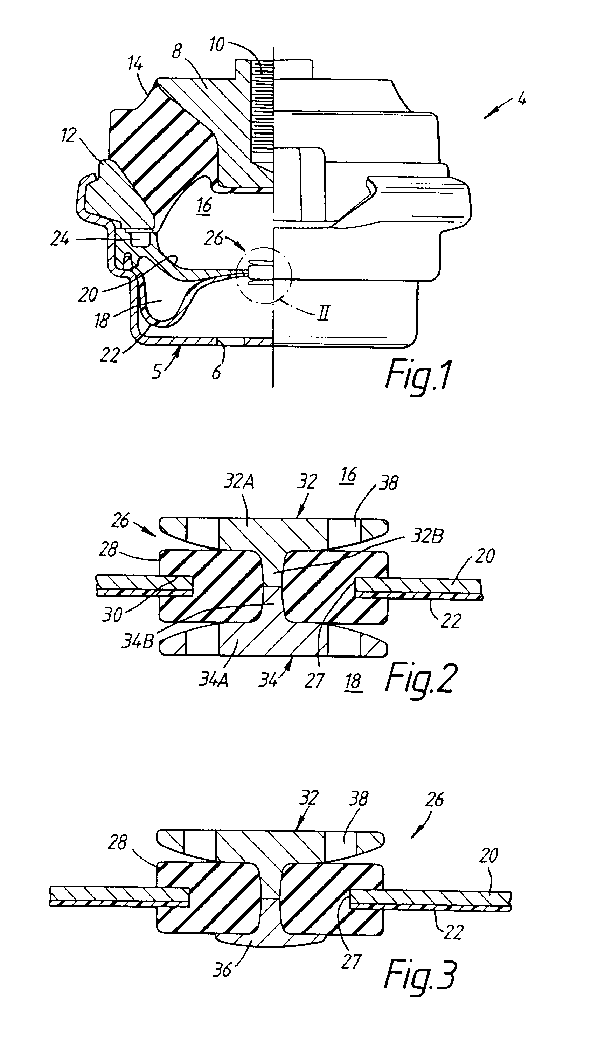

The hydraulic support 4 shown in Figure 1 may be used as an engine mount in a vehicle. It comprises a rigid base 5, such as made of steel, which is securely attached to the vehicle's body or chassis, such as by means of bolts passing through holes of which one is shown at 6. A rigid element 8, such as also made of steel, has a threaded bore 10 in which may be received a bolt attached to the engine. Several such hydroelastic supports may be similarly mounted at different positions around the engine.

The rigid base 5 is generally cup-shaped and supports an annular rigid member 12. A relatively stiff rubber element 14, of frusto-conical shape, supportingly extends between the element 8 and the member 12. Vibration of the engine relative to the vehicle body is thus accommodated and partially damped by corresponding flexure of the rubber element 14.

In addition, the support 4 defines two chambers filled with hydraulic fluid: a working chamber 16 and a compensation chamber 18. Chamber 16 is defined between the interior of the rubber element 14 and a shallow dish-shaped member 20 which is held securely and sealingly in position by the base 5 and the rigid annular member 12.

The compensation chamber 18 is defined by a flexible membrane 22 and the underside of the shallow dish-shaped member 20. The membrane 22 is sealingly clamped around its periphery between the dish-shaped member 20 and the base 5.

In addition, a control member 26 (Figure 2) is positioned between the working chamber 16 and the compensation chamber 18, within a region II shown in Figure 1. Figure 1 shows the control member 26 only diagrammatically. As shown in Figure 2, an aperture 27 is formed by matching holes through the central part of the dish-shaped member 20 and the flexible membrane 22. The control member 26 comprises a disc-shaped member 28 made of rubber or similar material which is provided with a peripheral slot 30 engaging the edge of the aperture.

In addition, the control member 26 includes upper and lower limitation plates 32 and 34 which are made of stiff material such as aluminium or plastics material. The plates 32 and 34 may be generally circular in plan view. Thus the upper plate 32 has a generally circular disc-shaped part 32A integrally connected with a central leg 32B which extends halfway through a central bore in the rubber element 28. Similarly, the lower limitation plate 34 has a circular disc-shaped part 34B integral with a central leg 34B which passes halfway through the central bore in the element 28 and abuts against the central leg 32B. The limitation plates 32,34 may be connected together, thus securing the rubber element 28 between them, by any suitable method such as by adhesive, by welding or by means of a screwed connection for example.

In operation, vibrations of the engine are partially absorbed and damped by the rubber element 14. Such vibrations are of course transmitting to the working chamber 16, causing alternative compression and expansion of the chamber and corresponding pressure variations therein. Vibrations of small amplitude, producing correspondingly small pressure variations, cause matching vibratory flexing of the rubber element 28 thus transmitting the pressure variations in the working chamber to the fluid in the compensation chamber. In this way, such small amplitude vibrations are damped.

When higher amplitude vibrations occur, the upper and lower limitation plates 32,34 alternately come into contact with the wall separating the working and compensation chambers 16,18. Thus limitation plate 32 comes into contact with the dish-shaped member 20 while limitation plate 34 comes into contact with the flexible membrane 22 (which is itself in contact with the member 20). Excessive strain of the rubber element 28 is therefore avoided. The limitation plates 32,34 help to ensure that the frequency of maximum damping for small amplitude vibrations is close to or substantially the same as the frequency of maximum damping for large amplitude vibrations. In other words, the limitation plates 32,34 increase the apparent strength of the flexible membrane 22 so that the frequency at maximum damping for large amplitude vibrations is increased.

In addition, the limitation plates 32,34 operate as pistons with reference to the fluid which enables hydraulic effects to be obtained at high frequencies by adjusting their mass and their section and providing them with high frequency orifices 38. These orifices present a certain resonant frequency to the fluid passing through them and become substantially blocked to the flow of the fluid at this resonant frequency. These orifices therefore reduce the stiffness of the support at frequencies below this resonant frequency but allow the stiffness to increase as the frequency increases.

As the amplitudes of the vibrations increase, so that the pressure changes within the working chamber can no longer be accommodated by the control element 26, fluid is forced between the working chamber 16 and the compensation chamber 18 through the conduit 24. The conduit 24 is shaped to restrict the flow of fluid oscillating therealong so as to damp the flow and consequently to damp the vibrations.

Figure 3 shows a variation of the shape of the control member 26 in which there is only a single limitation plate, the upper limitation plate 32. This is secured in position to the rubber element 28 by means of a connector element 36. The control member 26 of Figure 3 operates in generally the same way as for the control member 26 in Figure 2 except that the limitation plate 32 provides positive limitation of flexing of the rubber element 28 in one direction only.

It is not essential for the parts 32A and 34A of the limitation plates 32,34 to be disc-shaped; it is merely necessary that they extend sufficiently far in a radially outward direction to engage the separating wall between the working and compensation chambers 16,18 in response to large amplitude vibration, and they could, therefore, take a linear form, a cross-shaped form or a petal-shaped form in plan view, for example.

In hydroelastic mounts having working and compensation chambers (similar to chambers 16 and 18) interconnected by a conduit (like conduit 24), it is known to provide a direct connection between the two chambers (that is, by-passing the conduit) which is controlled by a movable normally rigid valve element. Such a valve element is mounted in position within the direct connection so as to be capable of limited bodily movement, or limited flexing, between a position in which the direct connection is open and positions in which the direct connection is closed. For example, the valve element may be disc-shaped and supported between closely spaced grills, one grill being open to the working chamber and the other grill being open to the compensation chamber. In this way, small amplitude vibrations of the engine cause small pressure changes in the chambers which in turn cause the valve element to move or flex, resulting in consequent limited movement of the hydraulic fluid between the two chambers, thus damping such small amplitude vibrations. For large amplitude vibrations, the valve element cannot respond and tends to be held in the closed position; transfer of fluid between the two chambers thus occurs through the circular or helical conduit, causing damping of the vibrations in the manner already described.

With such arrangements, therefore, the maximum damping for large amplitude vibrations occurs at a significantly lower frequency than it does for small amplitude vibrations.

In the arrangements shown in Figure 2 or 3, the control member 26 takes the place of such a rigid valve element. It is constructionally much simpler than such a valve element and requires no corresponding direct connection between the two chambers. Problems of wear occurring with the use of a valve element are avoided. Movement of the valve element can cause an unsatisfactory "clicking" noise, and thus is also avoided by the use of the control means 26. More importantly, however, its stiffness is increased at large amplitude vibrations because of the effect of the limitation plates 32,34 and this reduces the difference between the frequency at maximum danmping for small amplitude vibrations and the frequency at maximum damping for large amplitude vibrations.

## Claims

1. A hydroelastic support, comprising two relatively rigid elements (5,8) for respective connection to two relatively vibratable members, a chamber (16) containing a fluid and having a wall (14,20) interconnected with the two elements (5,8) so that part (14) of the wall flexes in response to the vibrations causing consequent pressure variations within the chamber (16), and control means (26) incorporating an element (28) of flexible material locally forming part of the wall (14,20) and flexing at least in relation to adjacent parts (20) of the wall (14,20) in response to the vibrations so at least partially to damp the vibrations, the control means (26) including movement-limiting means (32,34) for positively limiting the extent of flexing of the flexible element (28) characterised in that the movement-limiting means (32,34) is carried by and moves with the element (28) of flexible material.

2. A support according to claim 1, characterised by relatively stiff but resilient material (14) extending between the two rigid elements (5,8) so as to flex in response to the vibrations and to cause partial damping of the vibrations.

3. A support according to claim 2, characterised in that the part of the wall of the chamber which flexes is at least partially defined by the relatively stiff but resilient material (14).

4. A support according to any preceding claim, characterised in that the wall (20) adjacent the flexible element (28) is rigid and is apertured to receive the flexible element (28).

5. A support according to claim 4, characterised in that the movement-limiting means comprises a substantially rigid element (32) attached to the flexible element (28) so as to be positioned within the chamber (16) and to extend from the flexible element (28) and at least partially over the rigid wall (20) around the aperture whereby to limit the extent of flexing of the flexible element (28) by mechanical interference with the rigid wall (20).

6. A support according to claim 5, characterised in that the movement-limiting means includes a second substantially rigid member (34) secured to the flexible element (28) outside the chamber (16) and extending therefrom at least partially over the rigid wall (22) around the aperture, whereby to limit the extent of flexing of the flexible element (28) by mechanical interference with the rigid wall (22).

7. A support according to claim 5 or 6, characterised in that the or each substantially rigid element (32,34) includes at least one through passageway (38) permitting passage therethrough of the fluid at frequencies of vibration below a predetermined resonant frequency but blocking the passage of the fluid therethrough at the resonant frequency.

8. A support according to any preceding claim, characterised by a second chamber (18) containing fluid, the second chamber (18) being juxtaposed with the first-mentioned chamber (16) so that vibrations of the flexible element (28) in response to pressure variations in the first-mentioned chamber (16) cause pressure variations in the second chamber (18).

9. A support according to any one of claims 4 to 7, characterised by a second chamber (18) containing fluid, the second chamber (18) being juxtaposed with the first-mentioned chamber (16) so that vibrations of the flexible element (28) in response to pressure variations in the first-mentioned chamber (16) cause pressure variations in the second chamber (18), the rigid wall (20,22) separating the two chambers (16,18).

10. A support according to claim 8 or 9, characterised by a longitudinal conduit (24) interconnecting the two chambers (16,18) whereby fluid flows through the longitudinal conduit (24) in response to vibrations of large amplitude which cause the movement-limiting means (32,34) to limit flexing of the flexible element.

11. A support according to any preceding claim, characterised in that the fluid is a liquid.
